# EUROPEAN PATENT SPECIFICATION

(11) **EP 1 465 269 B1**
(45) Date of publication and mention of the grant of the patent: **01.08.2012**
(21) Application number: 04251966.0
(22) Date of filing: 01.04.2004
(51) Int. Cl.: H01M 4/60, H01M 4/02

(54) **Electrode and electrochemical device using the same**
Elektrode und diese verwendende elektrochemische Vorrichtung
Electrode et dispositif électrochimique l'utilisant

(30) Priority: 03.04.2003 JP 2003099989
(43) Date of publication of application: 06.10.2004
(73) Proprietor: Panasonic Corporation, Kadoma-shi Osaka 571-8501 (JP)
(72) Inventor: Inatomi, Yuu, Moriguchi-shi Osaka 570-0034 (JP); Shimada, Mikinari, Yawata-shi Kyoto 614-8117 (JP); Mino, Norihisa, Osaka-shi Osaka 530-0046 (JP); Hojo, Nobuhiko, Neyagawa-shi Osaka 572-0081 (JP)
(74) Representative: Bradley, Josephine Mary

(56) References cited:
- EP-A- 0 869 567
- JP-A- 11 007 959
- PATENT ABSTRACTS OF JAPAN vol. 1999, no. 05, 31 May 1999 (1999-05-31) -& JP 11 040152 A (YUASA CORP), 12 February 1999 (1999-02-12)
- PATENT ABSTRACTS OF JAPAN vol. 014, no. 441 (E-0981), 20 September 1990 (1990-09-20) -& JP 02 172157 A (TOSOH CORP), 3 July 1990 (1990-07-03)
- PATENT ABSTRACTS OF JAPAN vol. 1998, no. 06, 30 April 1998 (1998-04-30) -& JP 10 050299 A (MATSUSHITA ELECTRIC IND CO LTD), 20 February 1998 (1998-02-20)
- PATENT ABSTRACTS OF JAPAN vol. 014, no. 255 (E-0935), 31 May 1990 (1990-05-31) -& JP 02 075158 A (TOYOTA CENTRAL RES & DEV LAB INC), 14 March 1990 (1990-03-14)

## Description

### BACKGROUND OF THE INVENTION

The recent developments of mobile communications equipment and portable electronic equipment have created a great demand for power sources for such equipment. Rechargeable lithium secondary batteries, in particular, are widely used as the power sources for portable electronic equipment, because they have high electromotive force and high energy density, and can be used repeatedly.

However, with the reduction in size and weight of portable electronic equipment, there is a corresponding increase in demand that batteries have higher energy density. Accordingly, the development of new electrode materials having higher energy density is needed. Under such circumstances, materials are actively being developed, to create electrode materials having higher energy densities that will directly lead to the production of higher energy density batteries.

Recently, the use of organic compounds as electrode materials has been examined to produce batteries that have high energy density while being more lightweight. Organic compounds have a low specific gravity of about 1 g/cm³, being more lightweight than the oxides currently used as materials for lithium secondary batteries, such as lithium cobaltate. Therefore, the use of organic compounds makes it possible to produce more lightweight batteries with high capacity.

For example, U.S. Patents No 4,833,048 and Japanese Patent No. 2,715,778 (Japanese Laid-Open Patent Publication No. Hei 05-074459) propose a secondary battery using an organic compound with disulfide bonds as an electrode material. The simplest form of this organic sulfur compound is represented by the formula: M⁺-⁻S-R-S⁻-M⁺, where R is an aliphatic or an aromatic organic group, S sulfur, and M⁺ a proton or metal cation. Through an electrochemical oxidation reaction, this compound becomes polymerized by S-S bonds, thereby forming a polymer with a structure of M⁺-⁻S-R-S-S-R-S-S-R-S⁻-M⁺. This polymer returns to the original monomers through an electrochemical reduction reaction. These reactions are applied to the charge/discharge reactions of secondary butteries.

Also, U.S. Patent No. 5,523,179 proposes using sulfur, in its elementary state, as an electrode material. Sulfur, in its elementary state, theoretically has a very large capacity density of 1680 mAh/g. Therefore, it is expected to be a positive electrode material having high capacity, and an extensive study is being conducted thereon.

Although these proposals make it possible to heighten the capacity, they have the problem of low cycle characteristics. The causes of this problem are as follows. When a sulfur-based material is oxidized and reduced, the dissociation and recombination of the disulfide bonds take place. Once molecules dissociate from the disulfide bonds, the dissociated molecules migrate, so that the recombination frequency lowers. Also, the dissociated molecules migrate in the electrode and diffuse into the electrolyte, and the diffused molecules do not return to the electrode. Therefore, the dissociated molecules are unable to contribute to battery reactions. Further, if the active material, which causes an oxidation-reduction reaction at the electrode, dissolves into the electrolyte, it is possible that the cycle life characteristics deteriorate and internal short-circuits occur in the battery.

As described above, in an attempt to reduce the size and weight of batteries and heighten their energy density, the use of the organic compounds having disulfide bonds as the positive electrode active materials has been examined. However, suppressing the dissolving of the active material into the electrolyte is virtually difficult, and hence, these organic compounds have not been put to practical use despite their high theoretical energy density. In this way, although batteries using organic compounds as electrode active materials are lightweight and have high energy density, they have the problem of low cycle characteristics due to the ease with which the active material dissolves into the electrolyte.

In view of this problem, an object of the present invention is to provide an electrode in which an active material is immobilized to suppress the dissolving of the active material into an electrolyte. Another object of the present invention is to provide an electrochemical device that is lightweight and has high energy density and excellent cycle characteristics by using this electrode.

### BRIEF SUMMARY OF THE INVENTION

An electrode for an.electrochemical device in accordance with the present invention includes an organic compound that serves as an active material and a substrate carrying the organic compound. The substrate and the organic compound are held together by a covalent bond.

The covalent bond is at least one selected from the group consisting of Si-O bond and Ti-O bond.

The organic compound has an electrode reaction site which contributes to an oxidation reaction and said electrode reaction site is a thiol group, a free radical or a conductive polymer group.

It is preferable that the organic compound has a thiol group in the molecule thereof.

It is preferable that the organic compound has a free radical in the molecule thereof.

It is preferable that the organic compound comprises a conductive polymer.

It is preferable that the substrate be at least one selected from the group consisting of a metal, a carbonaceous material, a conductive polymer, glass, a silicone resin.

The present invention also relates to an electrochemical device including a pair of electrodes and an electrolyte, wherein at least one of the electrodes is the electrode as described above.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE SEVERAL VIEWS OF THE DRAWING

FIG. 1 is a diagram showing the mechanism of reaction between hydroxide groups on a substrate and an organic silicon compound having an alkyl silane group in the molecule thereof.

FIG. 2 is a schematic longitudinal sectional view of a coin type battery in accordance with the present invention.

### DETAILED DESCRIPTION OF THE INVENTION

With respect to the immobilization of an organic compound onto a substrate, there have been proposed methods utilizing, for example, the metal-sulfur bond that is formed when a self-assembly membrane of an organic sulfur compound having a thiol group in the molecule thereof is formed on the surface of metal such as copper, gold, or silver, and the amido bond that is formed between carboxylic acid groups on carbon surface and an organic compound having an amino group in the molecule thereof.

However, this metal-sulfur bond easily breaks down through a reduction reaction in a potential range of 2.0 V (vs. Li/Li⁺) or less. Thus, in battery applications, the organic compound, which is an electrode active material, is subject to separation from the substrate. Also, the amido bond is not thermally stable and therefore breaks down easily around 60 °C.

The present inventors have examined various combinations of organic compounds and substrates and studied covalent bonds. As a result, they have found combinations of organic compounds and substrates that yield excellent electrode characteristics, such as high energy density, and covalent bonds capable of firm bonding in battery applications.

The present invention relates to an electrode for an electrochemical device, including an organic compound that serves as an active material and a substrate carrying the organic compound, wherein the substrate and the organic compound are bonded together by a covalent bond.

The present invention combines an active material and a substrate which will be described below and immobilizes the active material to the substrate by covalent bonds. Accordingly, it is possible to suppress the dissolving of the active material into an electrolyte, thereby enabling an improvement in the stability of the electrode active material, and therefore, the cycle characteristics of the battery.

The organic compound serving as the active material has an electrode reaction site and a covalent bond site. The electrode reaction site contributes to an oxidation-reduction reaction associated with a battery reaction, while the covalent bond site contributes to the covalent bonds formed between the organic compound and the substrate.

The electrode reaction site may be, for example, a thiol group (SM group where M represents a hydrogen atom or a metallic atom such as a lithium atom) or a free radical.

Examples of the free radical include an oxy radical group, a nitroxyl radical group, a sulfur radical group, a hydrazyl radical group, a carbon radical group, and an boron radical group.

The compound having an electrode reaction site may be a conductive polymer. Examples of the conductive polymer include polyaniline, polypyrrole, polythiophene, and derivatives thereof.

The covalent bond site may be, for example, an SiX group, a TiX group (where X represents a halogen atom, an alkoxy group, or an acyloxy group), a carbon-carbon double bond, or an isocyanate group.

The compound having the electrode reaction site and the covalent bond site may include, for example, one, in which the electrode reaction site is a SM group and the covalent bond site is a CH₃OSi group, represented by the general 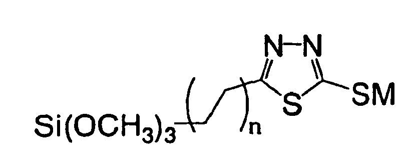 where n is an integral number of 1 or more, and M represents a hydrogen atom or a metallic atom such as a lithium atom.

Also, the compound, in which the electrode reaction site is polythiophene and the covalent bond site is the CH₃OSi group, represented by the general formula (2): 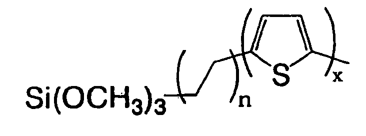 where n and x may be are independent each other and integral numbers of 1 or more, may be employed.

The compound, in which the electrode reaction site is the SM group and the covalent bond site is a CH₃OTi group, represented by the general formula (3): 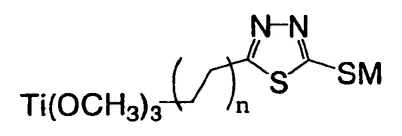 where n is an integral number of 1 or more, and M represents a hydrogen atom or a metallic atom such as a lithium atom, may be employed.

The compound, in which the electrode reaction site is the free radical and the covalent bond site is the CH₃OSi group, represented by the general formula (4): 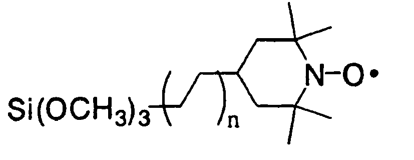 where n is an integral number of 1 or more, may be employed.

Let us take an example of an organic silicon compound R₁SiX₃ having an SiX group as the covalent bond site, where R₁ is an alkyl group which may or may not be substituted, which may be chain-shaped, cyclic, or branched, and which may contain one or more of nitrogen, oxygen, sulfur, and silicon. In this case, if a large number of hydroxide (OH) groups exist on the surface of a glassy substrate R₂, the following reaction (condensation reaction such as dehydrohalogenation or dealcoholization) proceeds.

R₁SiX₃ + 3R₂-OH→R₁-Si-(O-R₂)₃ + 3HX

As a result, Si-O bonds as covalent bonds are formed.

It should be noted that the dehydrohalogenation in which X is Cl in the above reaction is extensively applied to hydrophobic treatments of glass surface and that fiberglass reinforced plastics (FRP), for example, are manufactured using glass fibers having improved adhesion to resin.

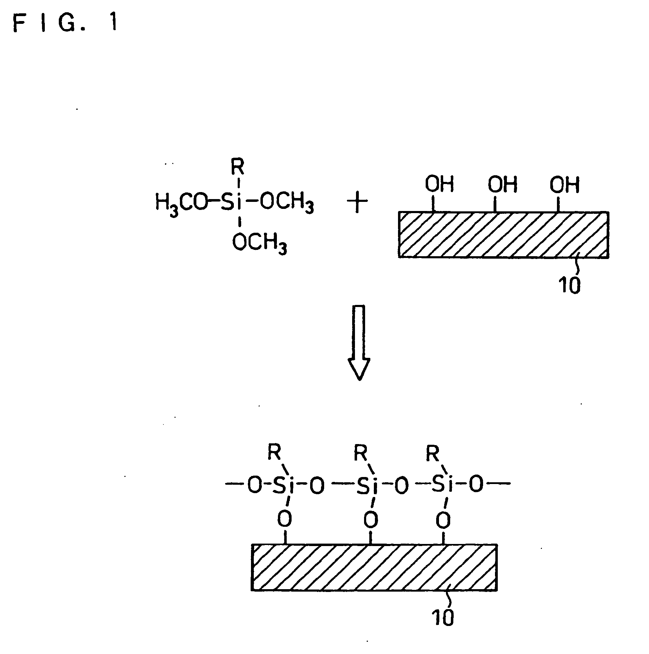

FIG. 1 shows an example of the mechanism of the reaction between an organic silicon compound RSi(OCH₃)₃ having an alkylsilane group in the molecule thereof and hydroxide groups on a substrate 10. Through a condensation reaction, a coating film of a uniform thickness of about several nm, made of an organic material having an R group, is formed on the glass substrate 10. Si-O bond is formed between the R group and the substrate 10. When part of the R group is caused to carry a substituent, the substituent functions as the electrode reaction site, as described above.

In a practical application, for example, where a glass plate with a large number of hydroxide groups on the surface is used as a substrate, an organic silicon compound is applied onto the surface of the substrate. Then, a condensation reaction between the substrate and the organic silicon compound proceeds, so that the organic silicon compound is readily carried on the substrate by covalent bonds. In this way, an electrode can be obtained.

In another practical application, for example, where particulate active carbon with a large number of hydroxide groups on the surface is used as a substrate, an organic silicon compound is dissolved in a solvent, and the substrate is immersed in this solution. Then, a condensation reaction between the substrate and the organic silicon compound proceeds, so that the organic silicon compound is readily carried on the substrate by covalent bonds. In this way, a composite material can be obtained. When this composite material is mixed with a binder and the like and formed into pellets, an electrode is obtained.

Also, in the case of using the organic silicon compound R₁SiX₃ having the SiX group as the covalent bond site, if CH₂OH groups and COOH groups exist on the surface of the substrate, the following reactions proceed.
R₁SiX₃ + 3R₂-CH₂OH → R₁-Si-(CH₂O-R₂)₃ + 3HX
R₁SiX₃ + 3R₂-COOH → R₁-Si-(COO-R₂)₃ + 3HX
As a result, Si-O bonds are formed.

The above-described Si-O bonds are very stable both thermally and chemically, so they are more preferable in that their bonds are firm. It is easy to obtain Si-O bonds through such reactions as described above. Also, the substrate is preferably a carbonaceous material such as active carbon. It is easy to form a large number of CH₂OH groups on the surface of the carbonaceous material, so that a large amount of an active material can be carried on the substrate.

The above description has been made on the organic compound having the SiX group, but the use of an organic compound having the TiX group as represented by the general formula (3) can also produce the same effects as those with the SiX group.

Further, in the case of using an organic compound R₁NCO having the isocyanate group as the covalent bond site, if hydroxyl groups exist on a substrate, the following reaction proceeds.
R₁NCO + R₂-OH → R₁-NHCOO-R₂ + H₂O
As a result, urethane bonds are formed.

Further, by utilizing a polymerization reaction, an addition reaction, or the like, for example, a plurality of materials represented by the general formula (6) having a thiol group as the electrode reaction site may be linked together to form an organic compound having a large number of electrode reaction sites within one molecule, and this organic compound may be used as an active material. In this case, the number of the electrode reaction sites is desirably up to about 10.

It is preferable that the substrate be at least one selected from the group consisting of a metal, a carbonaceous material, a conductive polymer, glass and a silicone resin.

As the carbonaceous material, active carbon, carbon black, graphite, acetylene black, carbon nanotube, fullerene, and the like are used. They may be subjected to a surface treatment in order to increase the number of hydroxyl groups and carboxyl groups. As the metal, aluminum, titanium, copper, nickel, stainless steel, and the like are used. The carbonaceous material and the metal may be used in the form of fine powder. As the conductive polymer, polyaniline, polypyrrole, polythiophene, derivatives thereof, and the like are used.

In order to improve the adhesion of the electrode constituent materials, a binder may be used. Examples of the binder include polyvinylidene fluoride, vinylidenefluoride-hexafluoropropylene copolymer, vinylidenefluoride-tetrafluoroethylene copolymer, polytetrafluoroethylene, styrene-butadiene copolymer, polypropylene, polyethylene, polyimide, etc.

As the positive or negative electrode current collector, a metal foil or a metal mesh comprising nickel, aluminum, gold, silver, copper, stainless steel, an aluminum alloy, or the like may be used. Carbon may be applied to the current collector in order to decrease the resistance of the electrode, allow the current collector to exert a catalytic effect, or bind the current collector and an active material chemically or physically.

When a separator is interposed between the positive and negative electrodes, the separator is impregnated with an electrolyte. The electrolyte preferably includes a solvent and a salt dissolved in the solvent. The electrolyte itself may be formed into gel so that it functions as the separator. In this case, it is preferred that the electrolyte is impregnated into a matrix such as polyacrylonitrile; a polymer containing an acrylate unit or a methacrylate unit; or a copolymer of ethylene and acrylonitrile. As the matrix, a crosslinked polymer is preferably used.

As the salt to be dissolved in the electrolyte, halides of alkali metals such as lithium, sodium and potassium; halides of alkaline earth metals such as magnesium; perchlorate; and salts of fluorine-containing compounds typified by trifluoromethanesulfonate are preferred. Specific examples thereof include lithiuim fluoride, lithium chloride, lithium perchlorate, lithium trifluoromethanesulfonate, lithium tetrafluoroborate, lithium bis(trifluoromethylsulfonyl)imide, lithium thiocyanate, magnesium perchlorate, magnesium trifluoromethanesulfonate, sodium tetrafluoroborate, etc. They may be used singly or in combination of two or more.

As the solvent, organic solvents such as ethylene carbonate, propylene carbonate, dimethyl carbonate, diethyl carbonate, methyl ethyl carbonate, γ-butyrolactone, tetrahydrofuran, dioxolane, sulfolane and dimethylformamide are preferred.

A solid electrolyte may be used instead of the above electrolyte. Examples of the solid electrolyte include Li₂S-SiS₂, Li₂S-P₂O₅, Li₂S-B₂S₅, Li₂S-P₂S₅-GeS₂, sodium/alumina (Al₂O₃) , amorphous polyether or polyether with a low phase transition temperature (Tg), amorphous vinylidene fluoride-hexafluoropropylene copolymer, blends of different polymers, polyethylene oxide, etc.

Next, the present invention is described more specifically by way of examples. These examples, however, are not to be construed as limiting in any way the present invention.

In each example, a coin type battery was produced, and its electrode active material was evaluated. The evaluation was performed in the same manner as the typical evaluation of a secondary battery. The following explains the method for fabricating a test electrode, the method for producing a coin type battery and the method for evaluating battery characteristics.

### EXAMPLE 1

### (i) Production of test electrode

A treatment liquid was prepared by mixing 5 parts by weight of an active material of the compound represented by the general formula (1): 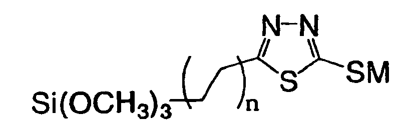 where n was 1, and M was a hydrogen atom, with 100 parts by weight of a solvent mixture of hexadecane and chloroform in a volume ratio of 4:1. Ten grams of active carbon, which had been subjected to an ozone treatment at 120°C for 10 minutes, was immersed in 100 ml of this treatment liquid, followed by stirring for 12 hours. The ozone treatment was performed to convert a large number of functional groups on the surface of the active carbon into hydroxyl groups.

The active carbon was filtered out from the treatment liquid and immersed in 100 ml of chloroform, followed by stirring for 1 hour. Subsequently, the active carbon was filtered out from the chloroform and immersed again in 100 ml of chloroform, followed by stirring for 1 hour. In this way, the active carbon was cleaned. The cleaned active carbon was filtered out and vacuum-dried for 10 hours, to produce a composite material comprising the active carbon carrying the active material. It should be noted that these treatments were performed in an argon atmosphere at a dew-point temperature of -30°C or less.

A spectroscopic technique was used to check if the active material was carried on the active carbon by covalent bonds. Specifically, an IR analysis of the active carbon carrying the active material was conducted. As a result, the peak attributed to S-H, the peak attributed to the C-S-C bond, the peak attributed to CH₂, and the peak attributed to the Si-O bond were observed at around 2500 cm⁻¹, at around 750 and 1250 cm⁻¹, at around 3000 cm⁻¹, at around 1100 cm⁻¹ respectively. This confirmed that the active material was carried on the active carbon by covalent bonds.

The composite material obtained in the above procedure was mixed with a binder of polytetrafluoroethylene in a weight ratio of 90:10, to produce a positive electrode material mixture. The positive electrode material mixture was attached under pressure to a 20 µm thick current collector made of aluminum foil, which was then rolled to a thickness of 100 *µ*m by rollers. This was punched into a disc of 13.5 mm, to produce a test electrode (positive electrode).

### (ii) Production of coin type battery

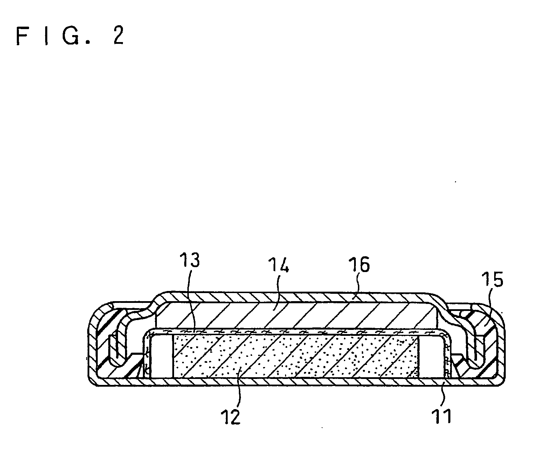

Using this test electrode as a positive electrode and a punched lithium metal disc of 13.5 mm with a thickness of 300 µm as a negative electrode, a coin type battery was produced as follows. FIG. 2 is a schematic longitudinal sectional view of a coin type battery.

A test electrode (positive electrode) 12 was placed in a case 11, and a separator 13 of a porous polyethylene sheet was placed on the test electrode 12. Subsequently, an electrolyte was fed into the case 11. The electrolyte was prepared by dissolving lithium fluoride at a concentration of 1.0 mol/L in a solvent mixture of propylene carbonate and ethylene carbonate (weight ratio 1:1). A metal lithium (negative electrode) 14 was attached to the inner face of a sealing plate 16, and a sealing ring 15 was fitted to the circumference of the sealing plate 16. The sealing plate 16 was fitted to the case 11 such that the metal lithium 14 and the test electrode 12 faced each other. The opening edge of the case 11 was crimped onto the sealing ring 15 by a pressing device, to seal the case 11. In this way, a coin type battery was produced.

### COMPARATIVE EXAMPLE 1

A positive electrode material mixture was prepared by mixing an active material of 2,5-dimercapto-1,3,4-thiadiazole, a conductive material of active carbon, and a binder of polytetrafluoroethylene in a weight ratio of 20:70:10. The treatment for immobilizing the active material to the active carbon was not performed. Using the positive electrode material mixture, a test electrode was produced in the same manner as in Example 1. A coin type battery was produced in the same manner as in Example 1 except for the use of this test electrode as a positive electrode.

### EXAMPLE 2

A composite material of active carbon carrying an active material was obtained in the same manner as in Example 1 except for the use of the compound represented by the general formula (3): 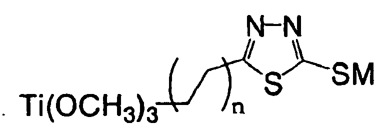 where n was 1 and M was a hydrogen atom, as an active material.

In the same manner as in Example 1, an IR analysis was conducted to check if the active material was carried on the active carbon by covalent bonds. As a result, the peak attributed to S-H, the peak attributed to the C-S-C bond, and the peak attributed to CH₂ were observed at around 2500 cm⁻¹, at around 750 and 1250 cm⁻¹, and at around 3000 cm⁻¹, respectively. This confirmed that the active material was carried on the active carbon by covalent bonds.

Using this composite material, a test electrode was produced in the same manner as in Example 1. Using this test electrode, a coin type battery was produced in the same manner as in Example 1.

### EXAMPLE 3

A composite material of active carbon carrying an active material was obtained in the same manner as in Example 1 except for the use of the compound represented by the general formula (4): 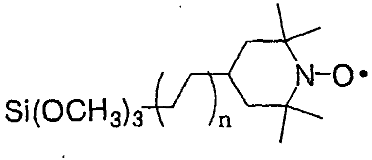 where n was 1, as an active material.

In the same manner as in Example 1, an IR analysis was conducted to check if the active material was carried on the active carbon by covalent bonds. As a result, the peak attributed to N-O, the peak attributed to the CH₂ chain, the peak attributed to cyclohexane, and the peak attributed to Si-O bond were observed at around 1500 cm⁻¹, at around 2800 cm⁻¹, at around 3000 cm⁻¹, and at around 1100 cm⁻¹ respectively. This confirmed that the active material was carried on the active carbon by covalent bonds.

Using this composite material, a test electrode was produced in the same manner as in Example 1. Using this test electrode, a coin type battery was produced in the same manner as in Example 1.

### EXAMPLE 4 (not according to the invention)

This is an example in which the compound of the chemical formula (5): 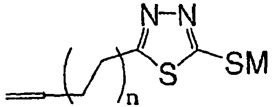 where n was 1 and M was a hydrogen atom, is carried on a substrate of active carbon by C-C bonds and C-O bonds.

Ten grams of active carbon, which had been subjected to an ozone treatment for 10 minutes, and 300 ml of a 50% formaldehyde aqueous solution were injected into a flask of 500 ml, and were reacted while being stirred for 12 hours. Thereafter, the active carbon was filtered out from the formaldehyde aqueous solution and then cleaned with pure water. In this way, methylol groups were carried on the surface of the active carbon.

To 1.0 gram of the resultant active carbon were added 30 ml of a 1.0 mol/L aqueous solution of the compound of the general formula (5) where n was 1 and M was a hydrogen atom and 1.0 ml of a 0.2 mol/L cerium nitrate ammonium aqueous solution. They were reacted while being stirred for 40 hours. The reaction temperature was 30°C, and the reaction atmosphere was a nitrogen atmosphere.

Through this reaction, C-C bonds and C-O bonds were formed in a ratio of about 1:1 between the methylol groups on the surface of the active carbon and the compound, represented by the general formula (5) where n was 1 and M was a hydrogen atom, thereby producing a composite material of the active carbon carrying the compound, represented by the general formula (5) where n was 1 and M was a hydrogen atom, as an active material. Then, the composite material was filtered out and cleaned.

A spectroscopic technique was used to check if the active material was carried on the active carbon by covalent bonds. Specifically, an IR analysis of the active carbon carrying the active material was conducted. As a result, the peak attributed to S-H, the peak attributed to the C-S-C bond, and the peak attributed to CH₂ were observed at around 2500 cm⁻¹, at around 750 and 1250 cm⁻¹, and at around 3000 cm⁻¹, respectively. This confirmed that the active material was carried on the active carbon by covalent bonds.

Using this composite material, a test electrode was produced in the same manner as in Example 1. Using this test electrode, a coin type battery was produced in the same manner as in Example 1.

### EXAMPLE 5 (not according to the invention)

A composite material of active carbon carrying an active material was obtained in the same manner as in Example 4 except for the use of the compound represented by the general formula (8): 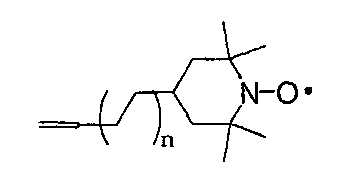 where n was 1, as an active material.

In the same manner as in Example 1, an IR analysis was conducted to check if the active material was carried on the active carbon by covalent bonds. As a result, the peak attributed to N-O, the peak attributed to CH₂ chain, and the peak attributed to cyclohexane were observed at around 1500 cm⁻¹, at around 2800 cm⁻¹, and at around 3000 cm⁻¹, respectively. This confirmed that the active material was carried on the active carbon by covalent bonds.

Using this composite material, a test electrode was produced in the same manner as in Example 1. Using this test electrode, a coin type battery was produced in the same manner as in Example 1.

### [Battery evaluation]

The coin type batteries of Examples 1 to 5 and Comparative Example 1 were charged and discharged at a constant current of 1.0 mA in a voltage range of 2.5 to 4.5 V. The discharge capacities of these batteries were obtained at the first, 10th, 50th and 100th cycles. Table 1 shows the results.

**Table 1**

| | Theoretical capacity (mAh/g) | Discharge capacity (mAh/g) | | | | Average discharge voltage (E/V vs. Li/Li⁺) |
|---|---|---|---|---|---|---|
| | | 1s^{t} cycle | 10th cycle | 50th cycle | 100th cycle | |
| Example 1 | 138 | 135 | 135 | 133 | 134 | 2.81 |
| Example 2 | 69 | 69 | 68 | 68 | 68 | 2.75 |
| Example 3 | 280 | 280 | 280 | 280 | 275 | 2.78 |
| Example 4* | 157 | 155 | 155 | 152 | 152 | 2.80 |
| Example 5* | 121 | 120 | 120 | 120 | 118 | 3.54 |
| Comparative Example 1 | 350 | 250 | 120 | 10 | 10 | 2.85 |

| | | | | | | |
|---|---|---|---|---|---|---|
| * (not according to the invention) | | | | | | |

Table 1 indicates that the discharge capacity of Example 1 of the present invention hardly lowers with charge/discharge cycles. The battery of Example 1 after the 100th cycle was examined, and no dissolving of the active material into the electrolyte was found. From these results, it has been found that when the active material is carried on the substrate by Si-O bonds, the dissolving of the active material into the electrolyte is suppressed, thereby resulting in excellent charge/discharge cycle characteristics.

In Comparative Example 1 in which the active material was not carried on the active carbon by covalent bonds, the discharge capacity was large at the first cycle. However, after that, the capacity lowered significantly, so that almost no discharge capacity was obtained at the 50th cycle. The battery of Comparative Example 1 after the 50th cycle was examined, and the dissolving of the active material into the electrolyte was observed. Therefore, it has been found that the capacity of the battery of Comparative Example 1 lowers significantly with charge/discharge cycles due to the dissolving of the active material into the electrolyte.

Also, in Examples 2 and 5, the discharge capacity hardly lowered until the 100th cycle in the same manner as in Example 1. From this result, it has been found that when the active material is carried on the substrate by Ti-O bonds, C-C bonds and C-O bonds, the dissolving of the active material into the electrolyte is suppressed, thereby leading to excellent charge/discharge cycle characteristics.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure.

## Claims

1. An electrode for an electrochemical device, comprising an organic compound that serves as an active material and a substrate carrying said organic compound, wherein: said substrate and said organic compound are bonded by a covalent bond; said organic compound has an electrode reaction site contributing to an oxidation-reduction reaction;
said electrode reaction site is a thiol group, a free radical or a conductive polymer group; and
said covalent bond is at least one selected from the group consisting of Si-O bond and Ti-O bond.

2. An electrode in accordance with claim 1
wherein the organic compound has a covalent bond site selected from
an SiX group and a TiX group wherein X
represents a halogen atom, an alkoxy group or an acyloxy group.

3. An electrode in accordance with claim 2 wherein the organic compound is selected from: 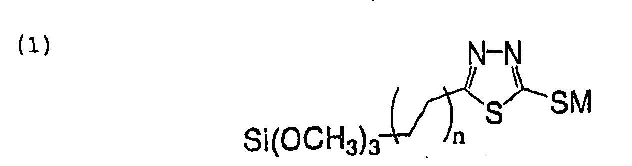 where n is an integral number of 1 or more, and M represents a hydrogen atom or a metallic atom; 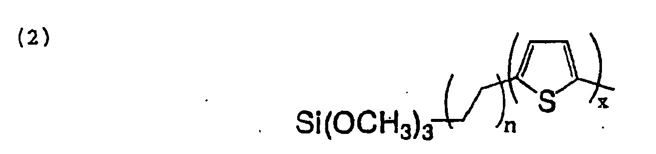 where n and x are independent of each other and are integral numbers of 1 or more; 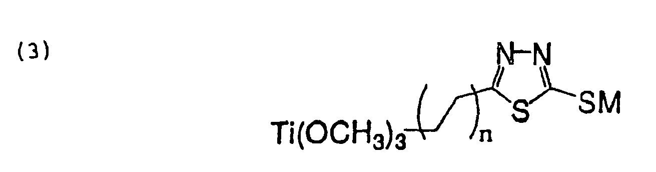 where n is an integral number of 1 or more, and M represents a hydrogen atom or a metallic atom; and 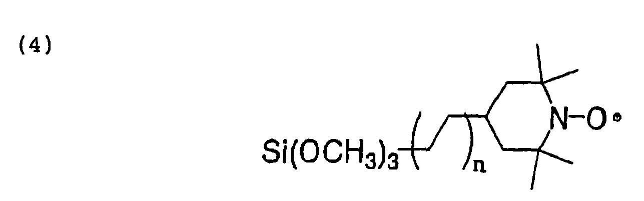 where n is an integral number of 1 or more.

4. An electrode for an electrochemical device in accordance with any one of the preceding claims, wherein said substrate is at least one selected from the group consisting of a metal, a carbonaceous material, a conductive polymer, glass, and a silicone resin.

5. An electrochemical device comprising a pair of electrodes and an electrolyte, wherein at least one of the electrodes is an electrode according to any one of the preceding claims.

6. Portable electronic equipment comprising an electrochemical device according to claim 5.

## Patentansprüche

1. Elektrode für eine elektrochemische Vorrichtung, die eine organische Verbindung, die als ein aktives Material dient, und ein Substrat, das die organische Verbindung trägt, umfasst, wobei: das Substrat und die organische Verbindung durch eine kovalente Bindung gebunden sind; die organische Verbindung eine Elektrodenreaktionsstelle aufweist, die zu einer Oxidations-Reduktions-Reaktion beiträgt;
die Elektrodenreaktionsstelle eine Thiolgruppe, ein freies Radikal oder eine leitfähige Polymergruppe ist; und
die kovalente Bindung wenigstens eine ausgewählt aus der Gruppe bestehend aus einer Si-O-Bindung und einer Ti-O-Bindung ist.

2. Elektrode nach Anspruch 1, wobei die organische Verbindung eine kovalente Bindungsstelle ausgewählt aus einer SiX-Gruppe und einer TiX-Gruppe aufweist, wobei X ein Halogenatom, eine Alkoxygruppe oder eine Acyloxygruppe darstellt.

3. Elektrode nach Anspruch 2, wobei die organische Verbindung ausgewählt ist aus: 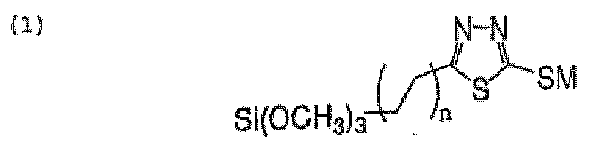 worin n eine ganze Zahl von 1 oder mehr ist und M ein Wasserstoffatom oder ein metallisches Atom darstellt; 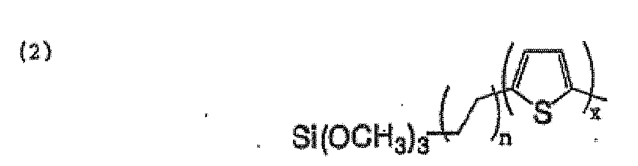 worin n und x unabhängig voneinander sind und ganze Zahlen von 1 oder mehr sind; 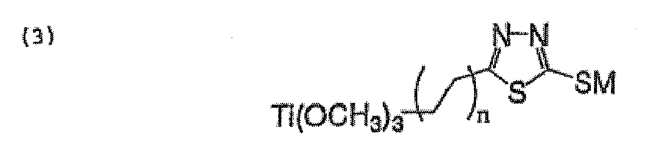 worin n eine ganze Zahl von 1 oder mehr ist und M ein Wasserstoffatom oder ein metallisches Atom darstellt; und 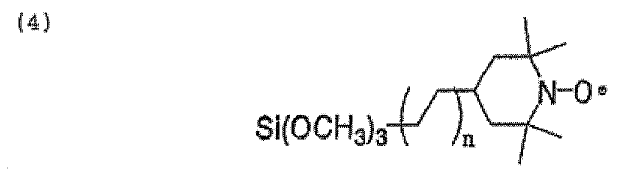 worin n eine ganze Zahl von 1 oder mehr ist.

4. Elektrode für eine elektrochemische Vorrichtung nach einem der vorhergehenden Ansprüche, wobei das Substrat wenigstens eines ausgewählt aus der Gruppe bestehend aus einem Metall, einem kohlenstoffhaltigen Material, einem leitfähigen Polymer, Glas und einem Silikonharz ist.

5. Elektrochemische Vorrichtung, die ein Elektrodenpaar und einen Elektrolyt umfasst, wobei wenigstens eine der Elektroden eine Elektrode nach einem der vorhergehenden Ansprüche ist.

6. Tragbare elektronische Ausrüstung mit einer elektrochemischen Vorrichtung nach Anspruch 5.

## Revendications

1. Électrode pour un dispositif électrochimique, comprenant un composé organique qui sert comme un matériau actif et un substrat supportant ledit composé organique, dans laquelle : ledit substrat et ledit composé organique sont liés par une liaison covalente ; ledit composé organique a un site de réaction à l'électrode contribuant à une réaction d'oxydation-réduction ;
ledit site de réaction à l'électrode est un groupe thiol, un radical libre ou un groupe polymère conducteur ; et
ladite liaison covalente est au moins une choisie parmi le groupe consistant en une liaison Si-O et une liaison Ti-O.

2. Électrode selon la revendication 1
dans laquelle le composé organique a un site de liaison covalente choisi parmi un groupe SiX et un groupe TiX dans lesquels X représente un atome d'halogène, un groupe alcoxy ou un groupe acyloxy.

3. Électrode selon la revendication 2 dans laquelle le composé organique est choisi parmi : 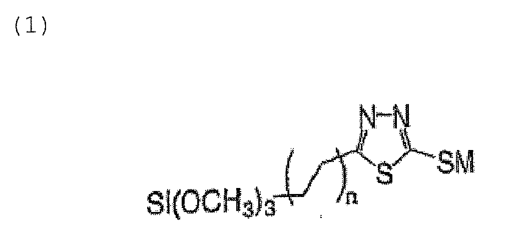 où n est un nombre entier de 1 ou plus, et M représente un atome d'hydrogène ou un atome métallique ; 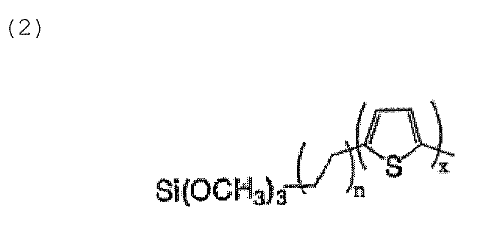 où n et x sont indépendants l'un de l'autre et sont des nombres entiers de 1 ou plus ; 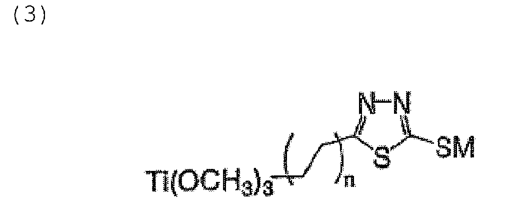 où n est un nombre entier de 1 ou plus, et M représente un atome d'hydrogène ou un atome métallique ; et 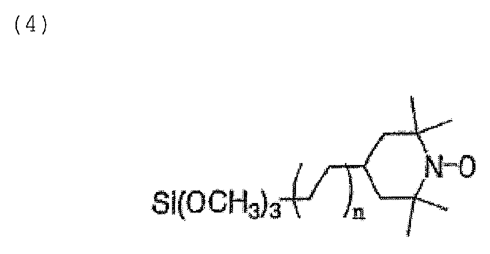 où n est un nombre entier de 1 ou plus.

4. Électrode pour un dispositif électrochimique selon l'une quelconque des revendications précédentes, dans laquelle ledit substrat est au moins un choisi parmi le groupe consistant en un métal, un matériau carboné, un polymère conducteur, un verre, et une résine de silicone.

5. Dispositif électrochimique comprenant une paire d'électrodes et un électrolyte, dans lequel au moins une des électrodes est une électrode selon l'une quelconque des revendications précédentes.

6. Équipement électronique portable comprenant un dispositif électrochimique selon la revendication 5.
